# EUROPEAN PATENT APPLICATION

(11) **EP 1 566 553 A1**
(43) Date of publication of application: **24.08.2005**
(21) Application number: 05075297.1
(22) Date of filing: 07.02.2005
(51) Int. Cl.: F16B 5/04, B62D 27/02, B62D 29/00, B62D 29/04, B62D 33/02

(54) **Improved substructure of a loading platform**

(30) Priority: 18.02.2004 BE 200400093
(71) Applicant: N.V. Henschel Engineering S.A., naamloze vennootschap, 2610 Wilrijk (BE)
(72) Inventor: Noukens, Edwin, 2610 Wilrijk (BE)
(74) Representative: Donné, Eddy

(57) **Abstract**

Improved substructure of a loading platform which consists of at least one longitudinal girder and one cross girder which are connected to each other either directly or by means of a connecting element, characterised in that the above-mentioned longitudinal and cross girder (3 en 4). are fixed to each other or to the above-mentioned connecting element (5) by means of pressed rivet connections (13) and/or rivet connections (14).

## Description

The present invention concerns an improved substructure of a loading platform.

More particularly, the present invention concerns the substructure of a loading platform for lorries, trailers and the like which consists of at least one longitudinal girder and one cross girder.

Such a substructure of a loading platform, whose longitudinal girders and cross girders can be attached to each other by means of resistance welding and/or arc welding is already known.

Such known welded joints are disadvantageous in that they can lead to high internal tensions and structural changes in and near the welding seam, which entails the risk of crack formation in the material.

It is also possible that structural members which are connected to each other start to warp under the influence of the above-mentioned structural changes as a result of the high temperatures that are created during the welding.

Another disadvantage of such welded joints is that they are difficult to realise and that they must be realised by qualified personnel.

Another disadvantage is that, during the assembly process, welding always entails a fire hazard and that the risk of burns is not excluded.

An additional disadvantage is that, with such welded joints, there is an increased risk of what is called crevice corrosion, and that the strength and quality of such welded joints cannot be guaranteed.

Moreover, it is only possible to realise a welded joint between a restricted number of materials, which usually have a largely similar mass, as a result of which the construction becomes heavy.

Another disadvantage is that such welding processes require much energy and that expensive additives are usually required, for example in the shape of welding electrodes and/or gases, which moreover have to be stored in a conditioned manner.

The present invention aims to remedy one or several of the above-mentioned and other disadvantages.

To this aim, the invention concerns an improved substructure of a loading platform which consists of at least one longitudinal girder and one cross girder which are fixed to each other either directly or by means of a connecting element, whereby the above-mentioned longitudinal and cross girder are fixed to each other or to the above-mentioned connecting element by means of pressed rivet connections and/or rivet connections.

Press riveting, also called pulse riveting, consists in providing a moulding die on one side of the elements to be connected and in pressing a rivet in these elements on the other side, which rivet is pushed against the moulding die as it is being pressed on and, as a result, is deformed, such that a mechanical connection is realised between the longitudinal and cross girders to be connected.

Riveting is another technique which consists in deforming material layers lying on top of each other by means of a punch, in such a manner that a tight connection is realised between the elements to be connected. To this end, the material layers concerned are pressed together in a moulding die, by means of the above-mentioned punch, situated on the other side of the material layers concerned.

An advantage of such pressed rivet and rivet connections is that no structural changes occur in the material of the longitudinal and cross girders that are fixed to each other, such that the risk of crack formation in the material decreases.

Another advantage of the invention is that girders which are connected to each other cannot warp under the influence of the above-mentioned structural changes, and that the risk of crevice corrosion decreases considerably.

Another advantage consists in that such pressed rivet and rivet connections are easy to realise and that they do not require any qualified welding personnel.

An additional advantage is that there is no fire hazard with this technique and that the risk of burns is excluded.

Another advantage is that such pressed rivet and rivet connections have predictable strength characteristics which can be controlled in a simple manner, and that the strength of the construction as a whole increases.

Moreover, when using the above-mentioned connection techniques, one is not bound to weldable materials, and it is possible to realise connections between numerous other materials as well, such that, by choosing lighter materials, the weight of the construction as a whole can be restricted, and whereby an efficient connection can nevertheless be realised between the different parts.

Another advantage of the invention is that a considerably faster and energy-saving production process is obtained.

Another advantage is that such connection techniques require relatively little energy.

In order to better explain the characteristics of the invention, the following preferred embodiments of an improved substructure of a loading platform according to the invention are described as an example only without being limitative in any way, with reference to the accompanying drawings, in which:
figure 1 schematically represents a lorry in perspective which is provided with a loading platform with an improved substructure according to the invention;
figure 2 represents a view according to arrow F2 in figure 1 with a partial omission;
figure 3 represents a practical embodiment of the part indicated in figure 2 with F3 in perspective and to a larger scale;
figures 4 and 5 are respective sections according to lines IV-IV and V-V in figure 3.

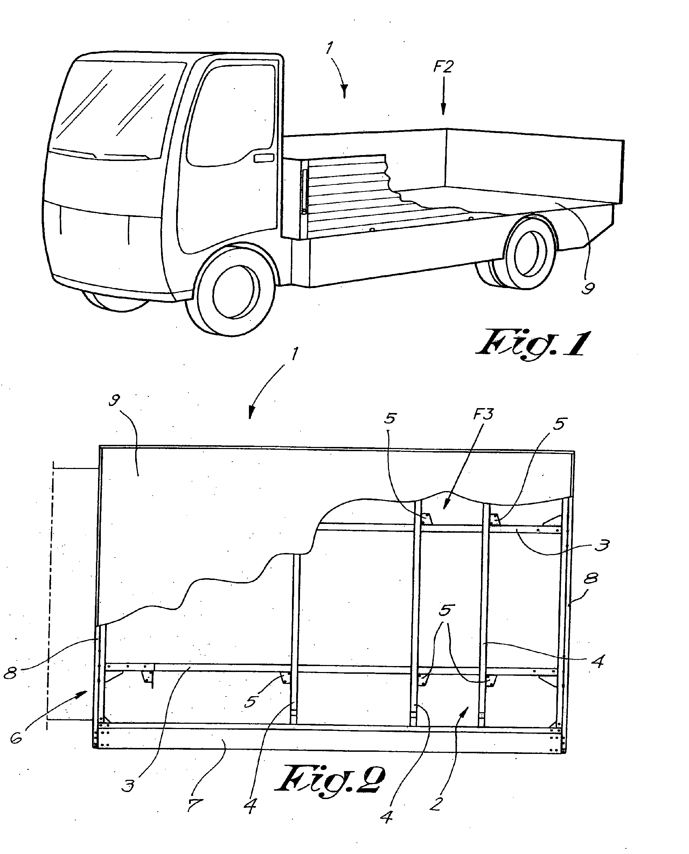

Figure 1 represents a lorry which is provided with a loading platform 1 with an improved substructure 2 according to the invention.

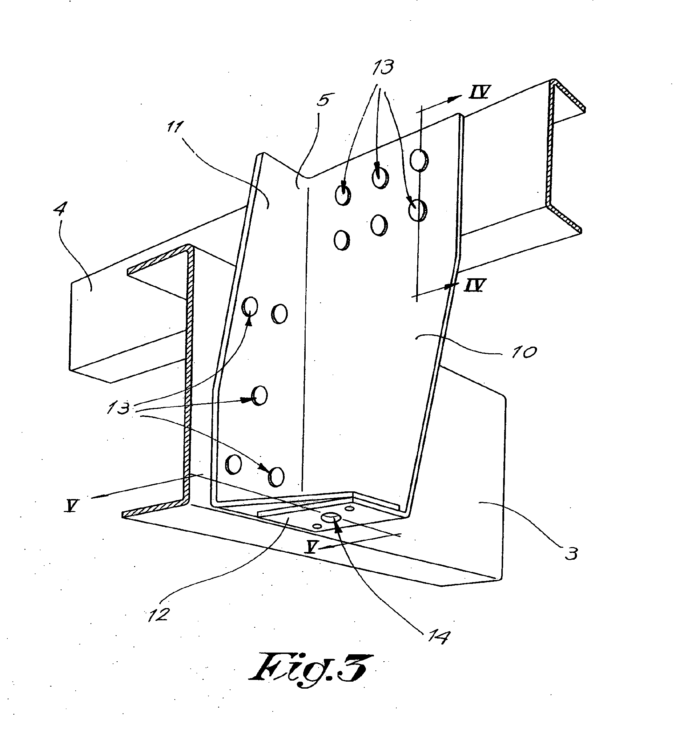

The substructure 2 of the loading platform 1 is represented in greater detail in figure 2 and mainly consists of two longitudinal girders 3, extending in the longitudinal direction of the above-mentioned loading platform 1.

On these longitudinal girders 3 are provided cross girders 4, whereby the mutual connection between the longitudinal and cross girders 3 and 4 is realised by means of connecting elements 5 which are connected to the longitudinal girders 3 on the one hand and to the cross girders 4 on the other hand, according to the invention, by means of press riveting and/or riveting.

The cross girders 4 are in this case provided in a frame structure 6, which mainly consists of two longitudinal frame profiles 7 which are connected to each other by means of two crosswise directed frame profiles 8, whereby the above-mentioned longitudinal and crosswise directed frame profiles 7 and 8 are connected to each other by means of angle elements onto which the profiles 7-8 are fixed, also according to the invention, by means of press riveting and/or riveting.

On the frame structure 6 and the cross girders 4 is provided a bottom plate 9, which forms the bottom of the loading platform 1 and which is connected to the above-mentioned frame structure 6 and/or cross girders 4 by means of press riveting and/or riveting.

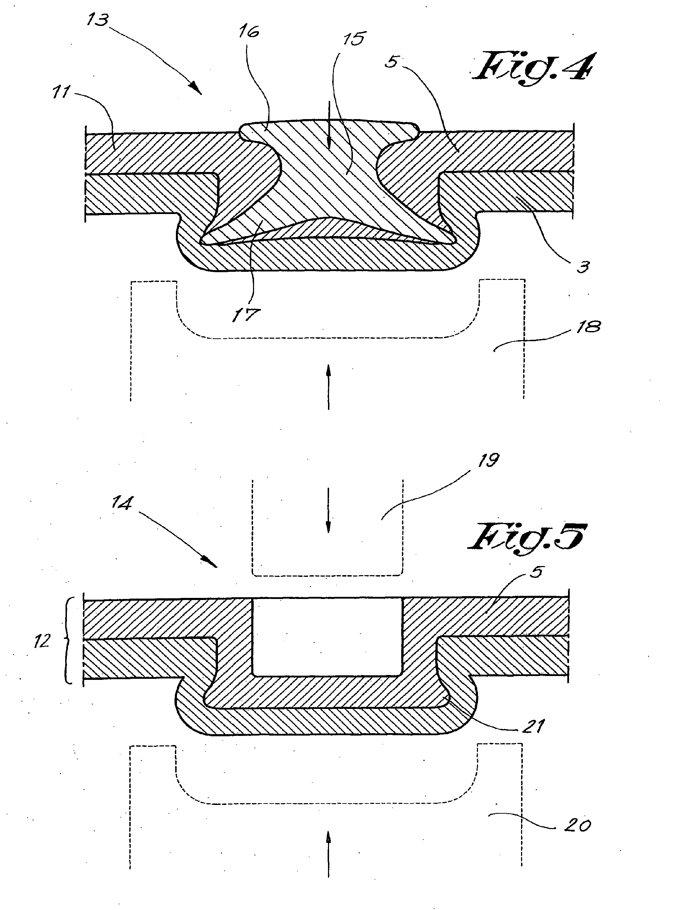

Figure 3 represents a connecting element 5 in detail which is connected to a longitudinal girder 3 on the one hand, and to a cross girder 4 on the other hand, whereby, in this case, both girders are made in the shape of a U-profile,

The connecting element 5 in this case consists of three standing walls 10, 11 and 12 standing at right angles, whereby the above-mentioned girders 3 and 4 are each fixed against a wall 10 and 11 respectively by means of pressed rivet connections 13.

The third wall 12 is formed of two parts of the walls 10 and 11 folded over each other, which, in this case, are connected to each other by means of a rivet connection 14.

Figure 4 represents a section according to line IV-IV, in figure 3, in which such a pressed rivet connection 13 is represented and whereby it is clear that, for the connection, use is made of a rivet 15 with a head 16 and a body 17 which is made hollow at its front end and whereby this rivet 15 is driven in the material to be connected by pressing the rivet 15 against a moulding die 18 situated on the other side of the materials to be connected, such that, during this pressing movement, the front end of the rivet 15 is pushed open, and a strong connection is created as a result of the deformation of the rivet 15 and of the materials to be connected.

In this manner is obtained a pressed rivet connection 13, which consists of a semi-hollow rivet 15, which extends in a part of the above-mentioned cross girder 4 and in the above-mentioned connecting element 5.

Figure 5 represents a section of the above-mentioned rivet connection 14 of the adjacent parts of the walls 10 and 11, whereby, in this case, the wall parts to be connected are attached to each other by making use of a punch 19 and of a moulding die 20 which are provided on either side of the materials to be connected and which are pressed against each other for the connection in order to deform the materials to be connected in such a manner that both wall parts show a bulge on one side, whereby the bulge of one wall is held with a collar 21 in the cavity in the bulge of the other wall, such that a tight connection is created.

The girders 3 and 4 may, as described above, consist of U-profiles, but they can also be made in the shape of L-profiles, I-profiles, beams with a predominantly rectangular section or the like.

The longitudinal and crosswise directed frame profiles 7 and 8 can also be made in the shape of one of the above-mentioned or other profile shapes. Besides, it should be noted that a combination of different profile shapes is possible as well.

The girders 3 and 4, the frame profiles 7 and 8 and the connecting elements 5 can all be made of a suitable construction material, such as metal, plastic or the like.

It is also possible to use a combination of different materials for the different parts, in order to obtain a construction that is less heavy.

Also, the different composing elements of the improved substructure according to the invention can be made, either or not partly, of different materials.

Naturally, it is not excluded to provide reinforcement profiles and/or extra connecting elements in order to increase the strength of the construction.

Moreover, it is also possible to maintain a welded joint in certain places and to combine it with pressed rivet connections 13 and/or rivet connections 14.

Each of the above-mentioned pressed rivet connections 13, rivet connection 14 respectively, can also be made in the shape of a rivet connection 14, pressed rivet connection 13 respectively.

The present invention is by no means limited to the embodiments given as an example and represented in the accompanying drawings; on the contrary, such an improved substructure of a loading platform according to the invention can be made in all sorts of shapes and dimensions while still remaining within the scope of the invention.

## Claims

1. Improved substructure of a loading platform which consists of at least one longitudinal girder and one cross girder which are connected to each other either directly or by means of a connecting element, **characterised in that** the above-mentioned longitudinal and cross girder (3 en 4) are fixed to each other or to the above-mentioned connecting element (5) by means of pressed rivet connections (13) and/or rivet connections (14).

2. Improved substructure of a loading platform according to claim 1, **characterised in that** each of the above-mentioned pressed rivet connections (13) consists of a semi-hollow rivet (15) which extends in at least a part of the above-mentioned longitudinal girder (3) and/or cross girder (4) and/or the connecting element (5) to be connected.

3. Improved substructure of a loading platform according to claim 1, **characterised in that** each of the above-mentioned rivet connections (14) consists of a bulge on one side of the above-mentioned longitudinal girder (3) and/or cross girder (4) and/or the connecting element (5) to be connected, and whereby the bulge of one longitudinal or cross girder (3 or 4) or connecting element (5) is held with a collar (21) in the cavity of the bulge of the other longitudinal or cross girder (3 or 4) of the connecting element (3, 4 or 5).

4. Improved substructure of a loading platform according to any one of the preceding claims, **characterised in that** the girders (3, 4) are either or not partly made of different materials.

5. Improved substructure of a loading platform according to claim 4, **characterised in that** the girders (3, 4) are made of metal.

6. Improved substructure of a loading platform according to claim 4, **characterised in that** the girders (3, 4) are made of plastic.

7. Improved substructure of a loading platform according to claim 4, **characterised in that** the girders (3, 4) are made of a combination of metal and plastic.

8. Improved substructure of a loading platform according to claim 1, **characterised in that** reinforcement profiles are provided, which are fixed to the above-mentioned girders (3, 4) by means of press riveting and/or riveting.
